# EUROPEAN PATENT APPLICATION

(11) **EP 3 342 569 A1**
(43) Date of publication of application: **04.07.2018**
(21) Application number: 17201230.4
(22) Date of filing: 13.11.2017
(51) Int. Cl.: B27B 5/29, B23D 47/02

(54) **DETENT MECHANISM WITH SEPARATELY ADJUSTABLE DETENTS**

(30) Priority: 30.12.2016 US 201615395900
(71) Applicant: Robert Bosch GmbH, 70442 Stuttgart (DE)
(72) Inventor: Mook, Eric Christopher, Villa Park, Illinois, 60181 (US)

(57) **Abstract**

A detent mechanism (150) includes a first detent plate (150A) and a second detent plate (150B). The first detent plate (150A) includes at least a first detent (152A). The second detent plate (150B) includes at least a second detent (152B). The second detent plate (150B) is separate from the first detent plate (150A). The first detent (152A) and the second detent (152B) correspond to different angles of a scale such that the first detent (152A) corresponds to a first angle on the scale and the second detent (152B) corresponds to a second angle on the scale.

## Description

### FIELD OF THE INVENTION

This disclosure relates to a detent mechanism.

### BACKGROUND

A miter saw apparatus typically includes a base assembly. In general, the base assembly includes a rotatable table with a locking arm. In addition, the base assembly typically includes detents that correspond to predetermined miter angles. With such a configuration, the locking arm is configured to engage with and disengage from a selected one of the detents of the base assembly. When the locking arm is engaged with a selected detent, the rotatable table is held at the miter angle position corresponding to the selected detent, thereby enabling the saw to make a miter cut at that miter angle. Alternatively, when the locking arm is disengaged from the detents, the rotatable table is free to rotate to a different miter angle position.

However, the base assembly may include at least one detent that is not properly aligned with its corresponding miter angle position. When the detents are not properly positioned, this misalignment affects the accuracy of the miter cuts.

### SUMMARY

The following is a summary of certain embodiments described in detail below. The described aspects are presented merely to provide the reader with a brief summary of these certain embodiments and the description of these aspects is not intended to limit the scope of this disclosure. Indeed, this disclosure may encompass a variety of aspects that may not be explicitly set forth below.

In an example embodiment, a detent mechanism includes a first detent plate and a second detent plate. The first detent plate includes at least a first detent. The second detent plate includes at least a second detent. The second detent plate is separate from the first detent plate. The first detent and the second detent correspond to different angles of a scale such that the first detent corresponds to a first angle on the scale and the second detent corresponds to a second angle on the scale.

In an example embodiment, a base assembly includes a rotatable table, a scale, and a detent mechanism. The rotatable table includes a locking arm that extends outward from the rotatable table. The scale includes angular measurements. The detent mechanism is configured to interact with the locking arm. The detent mechanism includes at least a first detent plate and a second detent plate. The first detent plate includes at least a first detent. The second detent plate includes at least a second detent. The second detent plate is separate from the first detent plate. The first detent and the second detent correspond to different angles of the scale such that the first detent corresponds to a first angle on the scale and the second detent corresponds to a second angle on the scale.

In an example embodiment, a power tool apparatus includes at least a power tool assembly and a base assembly. The power tool assembly includes a power tool. The base assembly provides a work surface for the power tool. The base assembly includes (a) a rotatable table with a locking arm extending outward from the rotatable table, (b) a scale of angular measurements, and (c) a detent mechanism configured to interact with the locking arm. The detent mechanism includes a first detent plate and a second detent plate. The first detent plate includes at least a first detent. The second detent plate includes at least a second detent. The second detent plate is separate from the first detent plate. The first detent and the second detent correspond to different angles of the scale such that the first detent corresponds to a first angle on the scale and the second detent corresponds to a second angle on the scale.

These and other features, aspects, and advantages of the present invention are further clarified by the following detailed description of certain exemplary embodiments in view of the accompanying drawings throughout which like characters represent like parts.

### BRIEF DESCRIPTION OF THE DRAWINGS

FIG. 1 is a perspective view of a power tool apparatus according to an example embodiment of this disclosure.
FIG. 2 is a top perspective view of a base assembly of the power tool apparatus of FIG. 1 according to an example embodiment of this disclosure.
FIG. 3 is a bottom perspective view of the base assembly of FIG. 2 according to an example embodiment of this disclosure.
FIG. 4 is a top view of a detent mechanism according to an example embodiment of this disclosure.
FIG. 5 is a bottom view of the detent mechanism of FIG. 4 according to an example embodiment of this disclosure.

### DETAILED DESCRIPTION

The embodiments described above, which have been shown and described by way of example, and many of their advantages will be understood by the foregoing description, and it will be apparent that various changes can be made in the form, construction, and arrangement of the components without departing from the disclosed subject matter or without sacrificing one or more of its advantages. Indeed, the described forms of these embodiments are merely explanatory. These embodiments are susceptible to various modifications and alternative forms, and the following claims are intended to encompass and include such changes and not be limited to the particular forms disclosed, but rather to cover all modifications, equivalents, and alternatives falling with the spirit and scope of this disclosure.

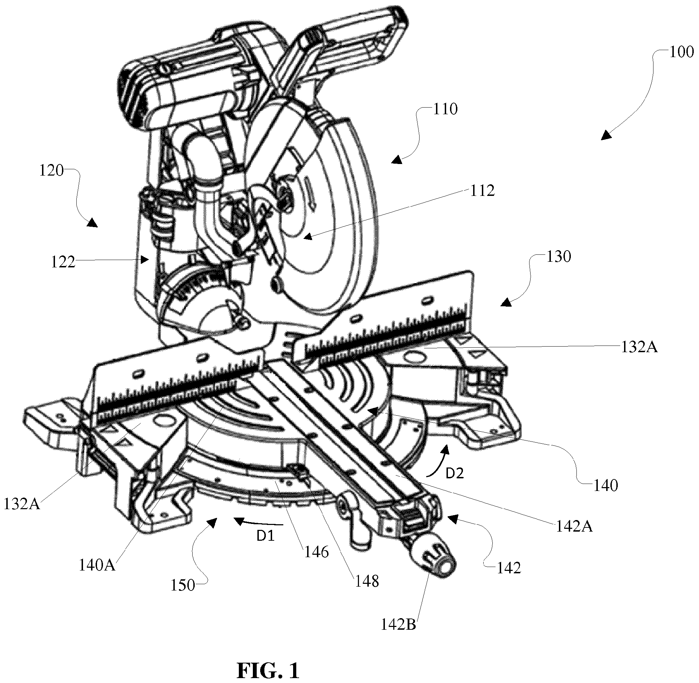

FIG. 1 illustrates a perspective view of a power tool apparatus 100 according to an example embodiment. In an example embodiment, the power tool apparatus 100 includes a power tool assembly 110. For example, in FIG. 1, the power tool apparatus 100 is a saw apparatus, such as a miter saw apparatus or any suitable type of saw apparatus, with a power tool assembly 110 that includes a cutting tool 112. In an example embodiment, the power tool assembly 110 is supported by a support assembly 120, which includes a support mechanism 122. Also, in an example embodiment, the support mechanism 122 is connected to a base assembly 130.

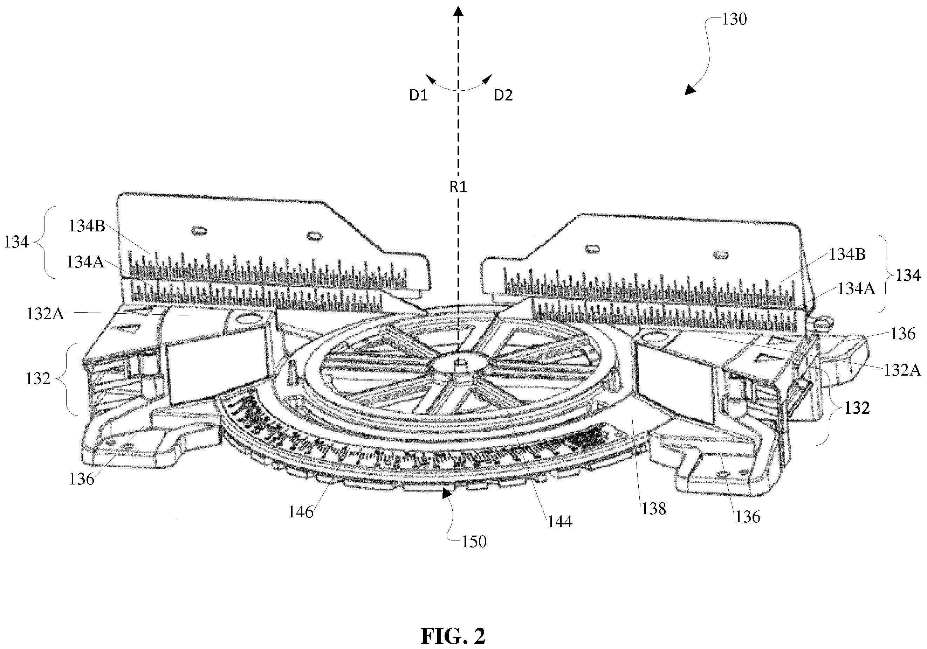

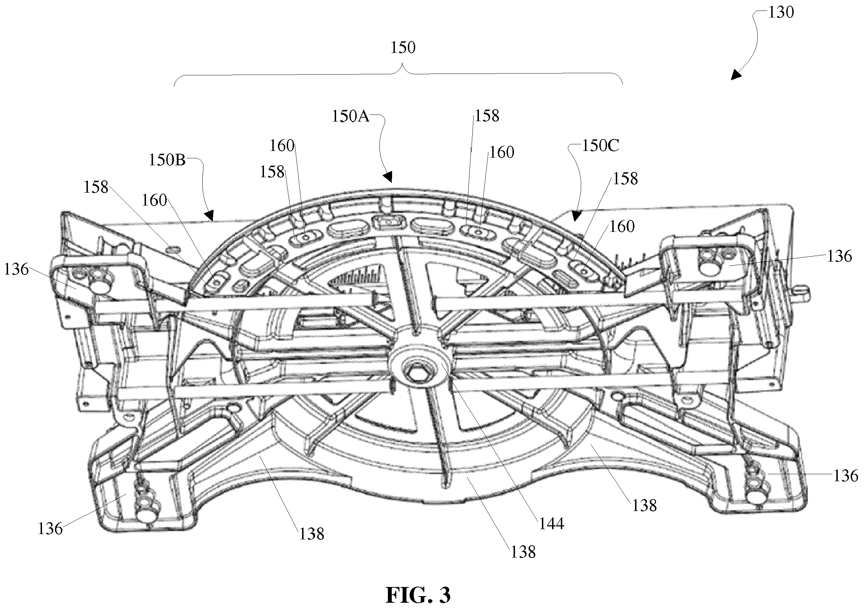

FIG. 2 illustrates a perspective view of a top side of the base assembly 130 according to an example embodiment. In an example embodiment, the base assembly 130 includes abase 138. In an example embodiment, the base 138 comprises a hard plastic, a metal material, any suitable material, or any combination thereof. As a non-limiting example, the base 138 comprises die cast aluminum. In an example embodiment, the base 138 includes mounting portions 136 and side portions 132. In an example embodiment, the mounting portions 136 provide areas in which a mechanical device (not shown), such as a clamp, a bolt, or other suitable fastener, is able to attach the power tool apparatus 100 to another surface (not shown). In an example embodiment, the mounting portions 136 are located at the four corners of the base 138, as shown in FIG. 3.

In an example embodiment, the base 138 includes side portions 132. In an example embodiment, each of the side portions 132 includes a top surface 132A, which is structured to support a workpiece. In addition, each of the side portions 132 is configured to support a fence assembly 134, which includes at least one fence to support a workpiece. For example, in FIG. 2, the fence assembly 134 includes at least a stationary fence 134A and a sliding fence 134B. In an example embodiment, the stationary fence 134A includes a first section that is secured to the left side portion 132 of the base 138 and a second section that is secured to the right side portion 132 of the base 138. Also, in an example embodiment, the sliding fence 134B is configured to slide to different positions to accommodate and support various types of workpieces, cuts, or a combination thereof.

In an example embodiment, the base 138 includes a table section 144, which is located between the side portions 132. In an example embodiment, the table section 144 is configured to receive a rotatable table 140 (FIG. 1) and enable the rotatable table 140 to rotate about a rotational axis R1. In this regard, for example, the table section 144 is circular or generally circular in plan view, as shown in FIG. 2. With such a configuration, the rotatable table 140 (along with the rotational axis R1) is conveniently located within a center region of the power tool apparatus 100.

In an example embodiment, the base assembly 130 includes the rotatable table 140, which is located at the table section 144. In an example embodiment, the rotatable table 140 is configured to rotate about the rotational axis R1 in a first direction D1 and a second direction D2, as shown in FIG. 1. In an example embodiment, the rotatable table 140 includes a work surface 140A, which is structured to support a workpiece. In an example embodiment, the work surface 140A of the rotatable table 140 is level or substantially level with the top surfaces 132A of the left and right side portions 132 of the base 138, as shown in FIG. 1. In this regard, the work surface 140A of the rotatable table 140, the top surface 132A of the left side portion 132, the top surface of the right side portion 132, or any combination thereof is structured to support a workpiece.

In an example embodiment, the rotatable table 140 includes a locking arm 142, as shown in FIG. 1. In an example embodiment, the locking arm 142 is an extension of the rotatable table 140. In an example embodiment, the locking arm 142 is configured to provide a work surface for the power tool. For instance, in FIG. 1, the locking arm 142 includes kerf inserts 142A with a slot to receive the cutting blade of the cutting tool assembly 112. Also, in an example embodiment, the locking arm 142 is configured to include any suitable locking mechanism (e.g., a lock knob 142B or the like) to lock the rotatable table 140 at the selected angular position.

In an example embodiment, as shown in FIGS. 1-2, the base assembly 130 includes an angular indicia 146 and a pointer 148, which enable a user to quickly rotate the rotatable table 140 to a desired angular position. More specifically, in an example embodiment, the angular indicia 146 is a miter scale, which is located on a scale section of the base 138. For example, in FIG. 2, the base 138 includes a scale section, which extends out from a front portion of the table section 144. In this example, the miter scale is mounted to an upper surface of the scale section. Also, in this example embodiment, the pointer 148 is located on the rotatable table 140 at one side of the locking arm 142, as shown in FIG. 1. In this regard, for example, the pointer 148 is configured to rotate with the rotatable table 140 and point to the corresponding angular measurement on the angular indicia 146.

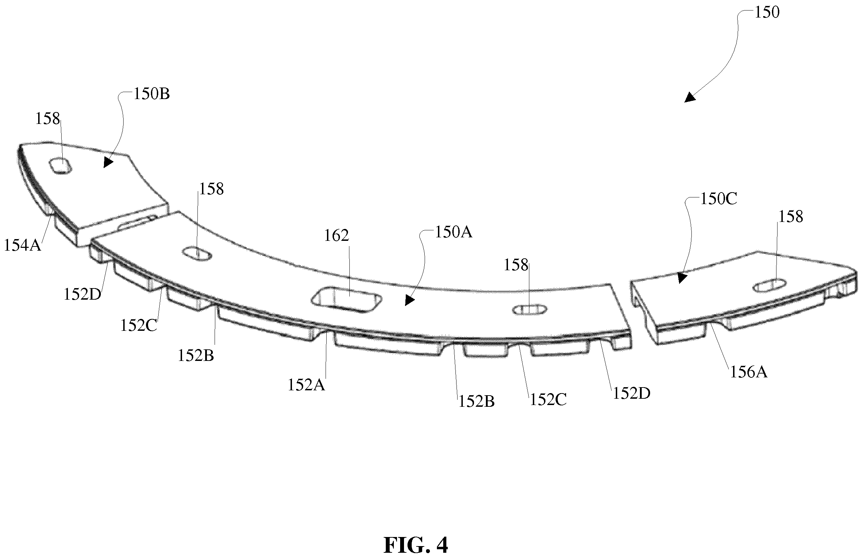

FIG. 3 illustrates a perspective view of a bottom side of a base assembly 130 according to an example embodiment. In an example embodiment, as shown in FIGS. 2-3, the base assembly 130 includes a detent mechanism 150. In an example embodiment, the detent mechanism 150 includes a plurality of detent plates, e.g. two or more detent plates, which are separate from each other. For instance, in FIG. 3, the detent mechanism 150 comprises at least a first detent plate 150A, a second detent plate 150B, and a third detent plate 150C. Each detent plate is physically separate from the other detent plates, as shown, for example, in FIGS. 4-5.

Although FIGS. 3-5 illustrate the detent mechanism 150 with three detent plates, the detent mechanism 150 is not limited to this configuration. As aforementioned, the detent mechanism 150 can include any suitable number of detent plates, e.g. two or more detent plates. Moreover, the detent mechanism 150 is able to realize a greater level of adjustability in its detent positions when the detent mechanism 150 is configured with a greater number of detent plates than that with a lesser number of detent plates.

In an alternative example embodiment (not shown), the detent mechanism 150 is segmented into ten detent plates in accordance with ten detents, which correspond to ten different miter angle positions that are often referenced in miter saw applications. More specifically, in this alternative example embodiment (not shown), the detent mechanism 150 includes a first detent plate with a detent for 45 degrees (on the left side), a second detent plate with a detent for 31.6 degrees (on the left side), a third detent plate with a detent for 22.5 degrees (on the left side), a fourth detent plate with a detent for 15 degrees (on the left side), a fifth detent plate with a detent for 0 degrees (at the center), a sixth detent plate with a detent for 15 degrees (on the right side), a seventh detent plate with a detent for 22.5 degrees (on the right side), an eighth detent plate with a detent for 31.6 degrees (on the right side), a ninth detent plate with a detent for 45 degrees (on the right side), and a tenth detent plate with a detent for 60 degrees (on the right side). As demonstrated by this alternative example embodiment, when the detent mechanism 150 is constructed of a greater number of detent plates, the detent mechanism 150 is able to provide a greater level of adjustability of the plurality of detents.

Referring to FIG. 3, in an example embodiment, the detent mechanism 150 is mounted to a mounting section of the base 138. In an example embodiment, the mounting section includes at least one mounting surface. In an example embodiment, the mounting section is on an underside of the base 138 and opposite to the scale section. In an example embodiment, each of the plurality of detent plates is separately attached to the mounting section of the base 138 by at least one mechanical fastener 160. In an example embodiment, each detent plate includes at least one attachment portion 158, e.g. at least one through hole to receive a mechanical fastener 160. In an example embodiment, each mechanical fastener 160 can be manipulated from a top side of the base 138 or a bottom side of the base 138. According to example embodiments disclosed herein, a mechanical fastener 160 refers to any suitable hardware device that joins, affixes, or assists in the joining of at least two components to each other. As a non-limiting example, the mechanical fastener is a screw, a clip, a bolt, a nut, any suitable device, or any combination thereof.

For example, in FIG. 3, each of the plurality of detent plates is separately attached to the base 138 by at least one mounting screw. More specifically, in this example, each detent plate is mounted with at least one mounting screw from a top side of the base 138 so that a user can easily adjust each detent plate by tightening or loosening a respective mounting screw from a top side of the base 138. Moreover, each of the plurality of detent plates is individually mounted to the base 138 in accordance with its corresponding angular position relative to the fence assembly 134. This feature is advantageous in that a detent (or a set of detents) associated with a detent plate can be mounted on the base 138 separately and independently from the other detent plates of the detent mechanism 150, thereby ensuring a more precise positioning of that detent (or that set of detents) relative to the fence assembly 134.

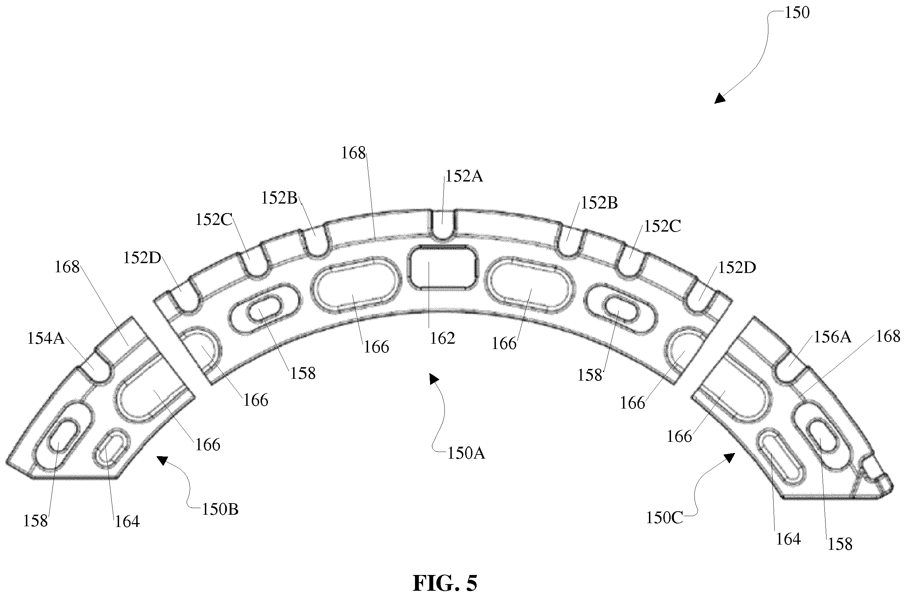

FIGS. 4-5 illustrate perspective views of the detent mechanism 150 according to an example embodiment. More specifically, FIG. 4 is a perspective view of a top side of the detent mechanism 150. FIG. 5, on the other hand, is a perspective view of a bottom side of the detent mechanism 150. In an example embodiment, the detent mechanism 150 is configured to be rigid, stable, and durable. In this regard, the detent mechanism 150 comprises a single material or a plurality of materials. In an example embodiment, the detent mechanism 150 comprises a plastic material, a metal material, any suitable material, or any combination thereof. For instance, in FIGS. 4-5, the detent mechanism 150 comprises thermo-set plastic, aluminum, or steel.

In an example embodiment, each detent plate includes one or more detents. In an example embodiment, each detent is located on an outer edge portion of the detent mechanism 150 so that each detent is easily accessible. More specifically, as an example, each detent is aligned along curved line 168, which is provided on each detent plate of the detent mechanism 150, as shown in FIG. 5. In this regard, the alignment of the detents ensures that each of the detents are similar or substantially similar in size when measured from the outer edge of the detent mechanism 150, as shown in FIGS. 4-5.

In an example embodiment, each detent is any suitable mechanical structure that is configured to interact with the locking arm 142. For example, in FIGS. 4-5, each detent is a groove, a recess, or a slot, which is configured to engage with and disengage from a component of the locking arm 142. In this regard, for example, the groove, recess, or slot can be tapered to enable easy insertion/removal of the component and provide a secure hold of the component. In an example embodiment, each of the detents has an opening at an outer edge of the detent mechanism 150 to be accessible to the component of the locking arm 142.

In an example embodiment, the component of the locking arm 142 is a detent insert, such as a pin, a wedge, a protruding part, or the like. In this regard, when the component of the locking arm 142 is engaged with a selected one of the detents of the detent mechanism 150, the locking arm 142 is configured to hold the rotatable table 140 at that position such that the power tool assembly 110, e.g. the cutting tool, is configured to operate at the corresponding angular position. On the other hand, when the component of the locking arm 142 is disengaged from the detents of the detent mechanism 150, the locking arm 142 is configured to rotate freely to various angular positions.

In an example embodiment, the detent mechanism 150 comprises an arc shape in plan view. In this regard, for example, each detent plate comprises a section of the arc shape, as shown in FIGS. 4-5. More specifically, in the example embodiment of FIGS. 4-5, the first detent plate 150A comprises a center section of the arc shape. Meanwhile, the second detent plate 150B and the third detent plate 150C comprise non-center sections or side sections of the arc shape. For instance, as shown in FIGS. 4-5, the second detent plate 150B is a side section, which is located on a left side of the first detent plate 150A, and the third detent plate 150C is a side section, which is located on a right side of the first detent plate 150A. The segmentation and sectoring of the detent mechanism 150 into a plurality of detent plates is advantageous in enabling and ensuring that each detent (or set of detents) of a respective detent plate is properly positioned with respect to the fence assembly 134.

More specifically, when each of the plurality of detent plates is mounted to the base 138, the detent mechanism 150 collectively includes detents that correspond to predetermined miter angles of the angular indicia 146, e.g. the miter scale. For instance, in the example embodiment of FIGS. 4-5, the first detent plate 150A includes a detent 152A corresponding to an angle of 0 degrees on the miter scale, the second detent plate 150B includes a detent 154A corresponding to an angle of 45 degrees on a left side of the detent 152A, and the third detent plate 150C includes a detent 156A corresponding to an angle of 45 degrees on a right side of the detent 152A.

Also, in an example embodiment, the detent mechanism 150 is configured to include other detents corresponding to other predetermined angles of the angular indicia 146. For example, referring to FIGS. 4-5, in addition to the detent 152A at the angle of 0 degrees on the miter scale, the first detent plate 150A is configured to include a detent 152B at an angle of 15 degrees, a detent 152C at an angle of 22.5 degrees, and a detent 152D at an angle of 31.6 degrees on the left side of the detent 152A, which is located on a left side of the first detent plate 150A. Meanwhile, the first detent plate 150A is also configured to include a detent 152B at an angle of 15 degrees, a detent 152C at an angle of 22.5 degrees, and a detent 152D at an angle of 31.6 degrees on the right side of the detent 152A, which is located on a right side of the first detent plate 150A, as shown in FIGS. 4-5. In this regard, any of the detent plates of the detent mechanism 150 can include more than one detent to correspond to more than one angular measurement on the angular indicia 146.

In an example embodiment, the detent mechanism 150 includes at least one connection portion 162. In an example embodiment, each connection portion 162 comprises any suitable mechanical structure, which is configured to connect to the base 138. As a non-limiting example, in FIGS. 4-5, the detent mechanism 150 includes a connection portion 162 on the first detent plate 150A. In this example, the connection portion 162 comprises a through-hole, which is structured to receive and mate with a foot (not shown) that protrudes from the base 138. In this regard, for example, this mating between the foot of the base 138 and the connection portion 162 of the detent mechanism 150 ensures that the first detent plate 150A is positioned at a suitable region (e.g., center region) of the base 138 and enhances the attachment of the first detent plate 150A to the base 138. In an alternative example embodiment, the detent mechanism 150 does not include any connection portions 162.

In an example embodiment, the detent mechanism 150 is structured to include at least one recessed portion of any suitable size and shape on at least a top side (or upper side), a bottom side (or lower side), or both sides of the detent mechanism 150. For instance, in the example embodiment of FIG. 5, the detent mechanism 150 includes a plurality of recessed portions on the bottom side of the detent mechanism 150. More specifically, in FIG. 5, the detent mechanism 150 has various recessed portions including a first set of recessed portions 164 and a second set of recessed portions 166. For instance, in FIG. 5, the first set of recessed portions 164 are smaller than the second set of recessed portions 166. In this regard, each recessed portion provides the detent mechanism 150 with a number of benefits, such as cost savings and material savings. In addition, each recessed portion is effective in reducing the net weight of the detent mechanism 150. In an alternative example embodiment (not shown), the detent mechanism 150 includes the first set of recessed portions 164, the second set of recessed portions 166, or no recessed portions.

In an example embodiment, the detent mechanism 150 includes attachment portions 158. More specifically, each detent plate includes at least one attachment portion 158. In an example embodiment, each attachment portion 158 comprises any suitable mechanical structure that enables or facilitates attachment to the base assembly 130. As a non-limiting example, in FIGS. 4-5, each detent plate includes at least one attachment portion 158, which comprises a through-hole. In an example embodiment, each through-hole is configured to receive a mechanical fastener 160, which securely connects that respective detent plate to the base 138, as shown in FIG. 3.

As discussed above, the detent mechanism 150 provides a number of advantageous features. In this regard, for example, the detent mechanism 150 includes a plurality of detent plates, which are physically separate from each other. This feature enables each detent plate of the detent mechanism 150 to be mounted to the base 138 with precision. In an example embodiment, for instance, each detent plate can be mounted to an underside of the base 138 by manipulating at least one mechanical fastener 160 from a top side of the base 138. This top side manipulation is easy and convenient for the user.

Also, with this configuration of the detent mechanism 150, an adjustment of a detent (or set of detents) requires manipulation of only the mechanical fastener 160 (or mechanical fasteners 160), associated with that respective detent plate, and does not require manipulation of all of the mechanical fasteners 160, which are associated with the detent mechanism 150 in its entirety. In this regard, the number of manipulations of mechanical fasteners 160 is reduced, for example, when making an adjustment to a detent (or a set of detents) associated with a detent plate. Accordingly, the detent mechanism 150 enables a detent (or a set of detents) to be adjusted, attached, or detached in a relatively fast and efficient manner.

In addition, the detent mechanism 150 includes a plurality of detent plates in which each detent plate includes at least one detent. This feature is advantageous in that the detent mechanism 150 is structured to provide a piecewise placement of each detent (or set of detents) relative to the fence assembly 134. Referring to FIGS. 4-5 as an illustrative example, the detent mechanism 150 is structured such that the detent 152A for 0 degrees, the detent 154A for 45 degrees on the left side of the scale, and the detent 156A for 45 degrees on the right side of the scale can be mounted to the base 138 separately from each other. In this regard, for instance, the second detent plate 150B can be positioned relative to the first section of the fence assembly 134 while enabling the third detent plate 150C to be positioned relative to the second section of the fence assembly 134. That is, the detent mechanism 150 is structured such that each detent plate along with its detent (or set of detents) can be placed at the appropriate position on the base 138 even in instances, for example, when the first and second sections of the fence assembly 134 are not coplanar.

Furthermore, the detent mechanism 150 is able to overcome some detent positioning issues associated with a comparative detent device, which has all of its detents (e.g., detent for 45 degrees on a left side, detent for 0 degrees, detent for 45 degrees on a right side, etc.) integrally formed on a monolithic structure. In this regard, for instance, if the monolithic structure is adjusted so that its detent for 0 degrees is perpendicular to a fixed fence, then its detent for 45 degrees (on a right or left side), may adjust to a position that is not at an angle of 45 degrees with respect to the fixed fence. As another example, if the monolithic structure is adjusted so that its detent for 45 degrees (on a right or left side) is positioned at an angle of 45 degrees relative to the fixed fence, then its detent for 0 degrees, may adjust to a position that is not perpendicular to the fixed fence. As illustrated in these examples, when adjusting the detent positions of the comparative detent device relative to the fixed fence, the adjustment of one detent of the monolithic structure may cause the other detents of the monolithic structure to be inaccurately positioned due to the dimensional accuracy of the monolithic structure. However, the detent mechanism 150, as disclosed herein, overcomes these detent positioning issues by providing detents across a plurality of detent plates, which are separately adjustable. Accordingly, since the detent mechanism 150 is structured to allow for the proper placement of each detent (or set of detents) via each detent plate, the power tool apparatus 100 is able to perform an operation at any one of the predetermined miter angles with a high level of accuracy.

That is, the above description is intended to be illustrative, and not restrictive, and provided in the context of a particular application and its requirements. Those skilled in the art can appreciate from the foregoing description that the present invention may be implemented in a variety of forms, and that the various embodiments may be implemented alone or in combination. Therefore, while the embodiments of the present invention have been described in connection with particular examples thereof, the general principles defined herein may be applied to other embodiments and applications without departing from the spirit and scope of the described embodiments, and the true scope of the embodiments and/or methods of the present invention are not limited to the embodiments shown and described, since various modifications will become apparent to the skilled practitioner upon a study of the drawings, specification, and following claims. For example, components and functionality may be separated or combined differently than in the manner of the various described embodiments, and may be described using different terminology. These and other variations, modifications, additions, and improvements may fall within the scope of the disclosure as defined by the claims.

## Claims

1. A detent mechanism comprising:
a first detent plate including at least a first detent; and
a second detent plate including at least a second detent, the second detent plate being separate from the first detent plate;
wherein:
the first detent and the second detent correspond to different angles of a scale such that the first detent corresponds to a first angle on the scale and the second detent corresponds to a second angle on the scale.

2. The detent mechanism of claim 1, wherein:
the first angle is an angle of 0 degrees on the scale; and
the second angle is an angle of 45 degrees on the scale, the second angle being an angular measurement on one side of the first angle.

3. The detent mechanism of claim 1, further comprising:
a third detent plate including at least a third detent, the third detent plate being separate from the first and second detent plates,
wherein:
the third detent corresponds to a third angle on the scale.

4. The detent mechanism of claim 3, wherein:
the third angle is an angle of 45 degrees on the scale, the third angle being an angular measurement on an opposite side of the first angle.

5. The detent mechanism of claim 1, wherein:
the detent mechanism comprises an arc shape in plan view;
the first detent plate comprises a center section of the arc shape; and
the second detent plate comprises a non-center section of the arc shape.

6. The detent mechanism of claim 1, wherein:
the detent mechanism comprises an arc shape in plan view;
the first detent is positioned on an outer edge portion of the first detent plate; and
the second detent is positioned on an outer edge portion of the second detent plate.

7. The detent mechanism of claim 1, wherein the first detent plate and the second detent plate comprise thermoset plastic or at least one metal.

8. A base assembly comprising:
a rotatable table with a locking arm extending outward from the rotatable table;
a scale of angular measurements; and
a detent mechanism configured to interact with the locking arm, the detent mechanism including:
a first detent plate including at least a first detent; and
a second detent plate including at least a second detent, the second detent plate being separate from the first detent plate;
wherein:
the first detent and the second detent correspond to different angles of the scale such that the first detent corresponds to a first angle on the scale and the second detent corresponds to a second angle on the scale.

9. The base assembly of claim 8, wherein:
the first angle is an angle of 0 degrees on the scale; and
the second angle is an angle of 45 degrees on the scale, the second angle being an angular measurement on one side of the first angle.

10. The base assembly of claim 8, wherein the detent mechanism further comprises:
a third detent plate including at least a third detent, the third detent plate being separate from the first and second detent plates,
wherein:
the third detent corresponds to a third angle on the scale.

11. The base assembly of claim 10, wherein:
the third angle is an angle of 45 degrees on the scale, the third angle being an angular measurement on an opposite side of the first angle.

12. The base assembly of claim 8, wherein:
the detent mechanism comprises an arc shape in plan view;
the first detent plate comprises a center section of the arc shape; and
the second detent plate comprises a non-center section of the arc shape.

13. The base assembly of claim 8, wherein:
the detent mechanism comprises an arc shape in plan view;
the first detent is positioned on an outer edge portion of the first detent plate; and
the second detent is positioned on an outer edge portion of the second detent plate.

14. A power tool apparatus comprising:
a power tool assembly including a power tool; and
a base assembly with a work surface for the power tool, the base assembly including (a) a rotatable table with a locking arm extending outward from the rotatable table, (b) a scale of angular measurements, and (c) a detent mechanism configured to interact with the locking arm, the detent mechanism including:
a first detent plate including at least a first detent; and
a second detent plate including at least a second detent, the second detent plate being separate from the first detent plate;
wherein:
the first detent and the second detent correspond to different angles of the scale such that the first detent corresponds to a first angle on the scale and the second detent corresponds to a second angle on the scale.

15. The power tool apparatus of claim 14, wherein:
the first angle is an angle of 0 degrees on the scale; and
the second angle is an angle of 45 degrees on the scale, the second angle being an angular measurement on one side of the first angle.

16. The power tool apparatus of claim 14, wherein the detent mechanism further comprises:
a third detent plate including at least a third detent, the third detent plate being separate from the first and second detent plates,
wherein:
the third detent corresponds to a third angle on the scale.

17. The power tool apparatus of claim 14, wherein the third angle is an angle of 45 degrees on the scale, the third angle being an angular measurement on an opposite side of the first angle.

18. The power tool apparatus of claim 14, wherein:
the detent mechanism comprises an arc shape in plan view;
the first detent plate comprises a center section of the arc shape; and
the second detent plate comprises a non-center section of the arc shape.

19. The power tool apparatus of claim 14, wherein:
the detent mechanism comprises an arc shape in plan view;
the first detent is positioned on an outer edge portion of the first detent plate; and
the second detent is positioned on an outer edge portion of the second detent plate.

20. The power tool apparatus of claim 14, wherein the power tool is a saw.
